# EUROPÄISCHE PATENTSCHRIFT

(11) **EP 3 418 154 B1**
(45) Veröffentlichungstag und Bekanntmachung des Hinweises auf die Patenterteilung: **23.11.2022**
(21) Anmeldenummer: 18171399.1
(22) Anmeldetag: 09.05.2018
(51) Int. Cl.: B61D 17/12, B61D 17/14, B61D 17/20

(54) **WINDLEITEINRICHTUNG ZUR ANORDNUNG ZWISCHEN ZWEI FAHRZEUGTEILEN EINES SCHIENENFAHRZEUGS**
WIND GUIDANCE EQUIPMENT FOR ARRANGEMENT BETWEEN TWO VEHICLE PARTS OF A RAIL VEHICLE
ENSEMBLE DÉFLECTEUR DESTINÉ À ÊTRE AGENCÉ ENTRE DEUX PARTIES DE VÉHICULE D'UN VÉHICULE FERROVIAIRE

(30) Priorität: 21.06.2017 DE 102017113761
(43) Veröffentlichungstag der Anmeldung: 26.12.2018
(73) Patentinhaber: Hübner GmbH & Co. KG, 34123 Kassel (DE)
(72) Erfinder: Krug, Lars, 34376 Immenhausen (DE); Wiegrefe, Andreas, 36039 Fulda/Berhards (DE)
(74) Vertreter: Walther Bayer Faber Patentanwälte PartGmbB

(56) Entgegenhaltungen:
- DE-A1-102011 003 025
- DE-U1-202010 001 793
- JP-A- H08 169 335
- JP-U- H0 679 682

## Beschreibung

Die vorliegende Erfindung betrifft eine Windleiteinrichtung zur Anordnung zwischen zwei beweglich miteinander verbundenen Fahrzeugteilen, insbesondere eines Schienenfahrzeuges, aufweisend mehrere an einem jeweiligen Fahrzeugteil anordenbare Windleitelemente, die elastisch verformbar sind und einen U-förmigen oder bogenförmigen Querschnitt aufweisen.

### STAND DER TECHNIK

Beispielsweise offenbart die DE 20 2010 001 793 U1 eine gattungsbildende Windleiteinrichtung, die zur Anordnung zwischen zwei beweglich miteinander verbundenen Fahrzeugteilen eines Schienenfahrzeugs ausgebildet ist. Die Windleiteinrichtung weist mehrere Windleitelemente auf, die an der Stirnseite des Fahrzeugteils am äußeren Rand angeordnet sind. Dabei bilden die Windleitelemente jeweils Abschnitte der am Rand umlaufenden Windleiteinrichtung, die an einem jeweiligen Fahrzeugteil stirnseitig angebracht ist. Durch ihre wenigstens abschnittsweise umlaufende Anordnung stoßen die Windleitelemente mit Bezug auf ihre Längsrichtung stirnseitig aneinander an, wobei angegeben ist, dass die Windleitelemente durch die Aufnahme an der Stirnseite der Fahrzeugteile seitlich gegeneinander vorgespannt sind. Würde die Windleiteinrichtung aus einem einteiligen, umlaufenden Windleitelement ausgebildet sein, so wäre dieses Windleitelement mit einer hohen Masse behaftet, schwer herstellbar und schwer montierbar und folglich auch nur als Ganzes austauschbar.

Im Betrieb eines Schienenfahrzeugs entsteht ein Versatz zwischen den Fahrzeugteilen im Bereich des Übergangs, insbesondere in Höhenrichtung und in Seitenrichtung, zudem führen die Fahrzeugteile eine Knickbewegung zueinander aus, sodass Kräfte auf die Windleitelemente einwirken, die auch bei einer einzelnen Anordnung von Windleitelementen eine elastische Verformung bewirken. Insbesondere bei Bewegungen in Querversatzrichtung zwischen den Fahrzeugteilen findet zusätzlich zur Gleitbewegung über die Kontaktflächen der sich gegenüberstehenden Windleitelemente eine Verformungsbewegung in Seitenrichtung statt, sodass sich im Bereich des Übergangs zwischen zwei Windleitelementen an einem gemeinsamen Fahrzeugteil nachteilhafterweise Absätze durch Versatzbewegungen ergeben können. Bei Schienenfahrzeugen mit höherer Geschwindigkeit sind dabei Spaltbildungen zwischen den Windleitelementen zu vermeiden, überdies ergibt sich eine Abnutzung der Stirnflächen der Windleitelemente, die unter Kraftaufbringung gegeneinander andrücken und durch die Versatzbewegung eine erhöhte Reibung gegeneinander erfahren.

Aus der DE 10 2011 003 025 A1 ist eine gattungsbildende Windleiteinrichtung zur Anordnung zwischen zwei beweglich verbundenen Fahrzeugteilen bekannt. An den Wagenkästen sind zur Befestigung einer Verkleidung Randverstärkungen eingebracht, die als Keder wirken. Eine stabilisierende Wirkung der Windleitelemente insbesondere zueinander kann mit der Randverstärkung nicht erzielt werden.

Die DE 20 2010 001 793 U1 offenbart eine Windleiteinrichtung mit mehreren Windleitelementen, die mit einem Stützkörper innenseitig ausgefüllt sind. Dadurch werden die Windleitelemente ausgesteift, eine Versteifung der Windleitelemente zueinander kann damit jedoch nicht erreicht werden.

Die JP H08 169335 A offenbart eine weitere Ausführung einer Windleiteinrichtung mit Windleitelementen, die einen Hohlraum aufweisen, der mit einem Schaumkörper gefüllt ist. Auch diese Ausführung ermöglicht keine Aussteifung mehrerer Windleitelemente zueinander.

Schließlich offenbart die JP H06 79682 U eine weitere Ausgestaltung einer Windleiteinrichtung mit mehreren Windleitelementen, die innenseitige Stege besitzen, um eine Aussteifung der in der Regel aus einem Elastomer ausgeführten Windleitelemente zu erreichen.

### OFFENBARUNG DER ERFINDUNG

Die Aufgabe der Erfindung betrifft die Weiterbildung einer Windleiteinrichtung zur Anordnung zwischen zwei beweglich miteinander verbundenen Fahrzeugteilen eines Schienenfahrzeugs, bei der eine Seitenbewegung der Windleitelemente reduziert wird und insbesondere eine Versatzbewegung der stirnseitig aneinander angrenzenden Windleitelemente an einem gemeinsamen Fahrzeugteil vermieden wird. Insbesondere soll eine über ihre Stirnseiten zwischen den Windleitelementen auftretende Reibung minimiert werden, überdies ist es die Aufgabe, eine Spaltbildung in der Windleiteinrichtung zu vermeiden und die Gebrauchsdauer der Windleitelemente zu verlängern.

Diese Aufgabe wird ausgehend von einer Windleiteinrichtung gemäß dem Oberbegriff des Anspruches 1 mit den kennzeichnenden Merkmalen gelöst. Vorteilhafte Weiterbildungen der Erfindung sind in den abhängigen Ansprüchen angegeben,

Die Erfindung sieht zur Lösung der vorstehenden Aufgabe einen Stabilisierungskörper vor, der sich zumindest abschnittsweise in die Windleitelemente hinein erstreckt und an wenigstens einer Stirnseite der Windleitelemente aus diesen herausgeführt ist, wobei die Windleitelemente mit Bezug auf ihre Längsrichtung stirnseitig aneinander angrenzen, wobei sich der Stabilisierungskörper mit einem ersten Abschnitt in ein erstes Windleitelement und mit einem zweiten Abschnitt in ein zweites Windleitelement hinein erstreckt.

Der Grundgedanke der Erfindung sieht zur Lösung der voranstehenden Aufgabe vor, das Windleitelement durch den Stabilisierungskörper in sich zu stabilisieren und/oder durch das Herausführen des Stabilisierungskörpers und ein mögliches Anbinden oder Weiterführen des Stabilisierungskörpers an einem oder gegen einen weiteren Körper zur Verminderung einer elastischen Seitenbewegung zu stabilisieren. Dabei ist es zur Erreichung der einhergehenden Vorteile hinreichend, den aus dem Windleitelement herausgeführten Stabilisierungskörper in lediglich vorteilhafter Weise so zu befestigen, dass über den Stabilisierungskörper eine stützende und stabilisierende Kraft auf das Windleitelement ausgeübt werden kann.

Da mehrere Windleitelemente zur Bildung der Windleiteinrichtung an den Fahrzeugteilen angeordnet sind, die mit Bezug auf ihre Längsrichtung stirnseitig aneinander angrenzen, kann sich der Stabilisierungskörper mit einem ersten Abschnitt in ein erstes Windleitelement und mit einem zweiten Abschnitt in ein benachbartes zweites Windleitelement hinein erstrecken.

Sind die Windleitelemente stirnseitig aneinander gesetzt, so kann bereits ein auch kürzerer Stabilisierungskörper in beide Windleitelemente abschnittsweise eingeführt sein, um die aneinander grenzenden Enden der Windleitelemente gegenseitig zu stabilisieren, sodass eine Versatzbewegung der Windleitelemente quer zu ihrer Längsrichtung unterbunden wird. Erfolgt eine Versatzbewegung zwischen den Fahrzeugteilen, und werden die mehreren Windleitelemente der Windleiteinrichtung unterschiedlich stark mit Querkräften belastet, so bewirkt der Stabilisierungskörper, dass bei einer elastischen Querverformung eines Windleitelementes das angrenzende Windleitelement ebenfalls mit der Querverformung wenigstens teilweise mitgeführt wird, wodurch eine Gesamtverformung verringert wird und ein Stabilisierungseffekt erreicht wird. Überdies entsteht der besondere Vorteil, dass die mehreren mit dem wenigstens einen Stabilisierungskörper verbundenen Windleitelemente eine höhere Steifigkeit in Querrichtung erhalten, sodass eine elastische Querverformung der Windleitelemente erst deutlich verzögert eintritt, und die Windleitelemente gleiten über ihre Kontaktflächen auch bei höherer Kontaktkraft besser gegeneinander ab, wenn eine Bewegung zwischen den Fahrzeugteilen stattfindet, insbesondere in einer Innenkurve eines Streckenprofils, das beispielsweise vom Schienenfahrzeug befahren wird.

Gemäß einer möglichen Ausführungsform weist jedes Windleitelement wenigstens einen Aufnahmekanal auf, in den sich die gegenüberliegenden Abschnitte des Stabilisierungskörpers hinein erstrecken. Der Aufnahmekanal durchwandert das Windleitelement dabei parallel zu dessen Längsrichtung, wobei der Aufnahmekanal als eine Art Sackbohrung in der Stirnseite des Windleitelementes oder als durchgehender Kanal von Stirnseite zu Stirnseite des Windleitelementes ausgebildet sein kann. Die Ausgestaltung des Aufnahmekanals im Querschnitt ist dabei vorteilhafterweise angepasst an die Querschnittsform des Stabilisierungskörpers.

Mit weiterem Vorteil weist jedes Windleitelement, das mit einer U-Form oder einer Bogenform ausgeführt ist, eine Hohlkammer auf, wobei der Aufnahmekanal in der Hohlkammer ausgebildet ist. Das Windleitelement ist auf an sich bekannte Weise ausgebildet aus einem im Wesentlichen formstabilen, dickeren Elastomerkörper, und der Aufnahmekanal ist beispielsweise an der Innenseite oder an der Außenseite der U- oder bogenförmigen Materialwand angeordnet bzw. an dieser angebracht oder integriert in dieser ausgeführt. Die U- oder bogenförmige Materialwand zur Bildung des Windleitelementes besitzt stirnseitig auf der Außenseite eine Kontaktfläche, die mit der Kontaktfläche des am gegenüberliegenden Fahrzeugteil angeordneten Windleitelementes aufeinander abgleitend in Kontakt steht. Der wenigstens eine Aufnahmekanal zur Aufnahme des wenigstens einen Stabilisierungskörpers befindet sich dabei vorzugsweise an der Vorderseite im Hohlraum der Windleitelemente, welche Vorderseite innenseitig angrenzt an die außenseitige Kontaktfläche. Dadurch entsteht eine besonders wirkungsvolle Stabilisierung der Windleitelemente, um einen gegeneinander auftretenden Versatz zu vermeiden.

Gemäß einer weiterführenden Ausbildung der Windleiteinrichtung weist jedes Windleitelement wenigstens einen Materialabschnitt auf, der in die Hohlkammer ragt und den Aufnahmekanal bildet. Beispielsweise kann das Windleitelement aus einem Elastomer im Extrusionsverfahren hergestellt werden, sodass der Materialabschnitt auf einfache Weise mittels einer entsprechenden Ausführung einer Extrusionsmatrize ausgebildet werden kann, ohne dass weitere Arbeitsschritte erforderlich werden. Folgerichtig ist der Materialabschnitt zur Umlaibung des Aufnahmekanals einteilig und materialeinheitlich mit dem Material der Wandung des Windleitelementes ausgebildet, insbesondere durch ein Elastomer.

Gemäß einer ersten Variante der Erfindung ist der Stabilisierungskörper durch einen Stab oder eine Stange gebildet, der bzw. die sich mit gegenüberliegenden Abschnitten in die stirnseitig aneinander angrenzenden Windleitelemente hinein erstreckt. Der Aufnahmekanal im Windleitelement kann hierfür beispielsweise als Sackloch ausgeführt sein, und der Stab oder die Stange kann aufgrund eines entsprechenden Aufmaßes in den Aufnahmekanal leicht eingedrückt werden, sodass der Stab oder die Stange spielfrei im Aufnahmekanal eingeführt und damit selbsthaltend angeordnet ist. Eine solche Variante des Stabilisierungskörpers ist mit Vorteil formstabil und damit biegesteif ausgebildet, und der Stab oder die Stange kann aus einem Kunststoffmaterial, aus einem Elastomer, aus einem metallischen Werkstoff oder dergleichen ausgebildet sein.

Gemäß einer zweiten Variante der Erfindung ist der Stabilisierungskörper durch ein Zugmittel gebildet, insbesondere durch ein Seil, durch einen Gurt oder durch eine Kette, das, der bzw. die durch den Aufnahmekanal geführt ist. Damit ergibt sich der weitere Vorteil, dass der Aufnahmekanal in Längsrichtung über der umlaufenden Länge der Windleitelemente verlaufen kann und sich das Zugmittel durch diese Aufnahmekanäle insgesamt hindurch erstrecken kann, wobei der Stabilisierungskörper, also das Seil, der Gurt oder die Kette, die Aufnahmekanäle von wenigstens zwei, von mehr als zwei oder von allen Windleitelementen durchlaufen kann. Dabei entsteht der weitere Vorteil, dass auf das Seil, den Gurt oder auf die Kette eine Zugspannung aufgebracht werden kann. Hierdurch wird eine besondere Stabilität zwischen den Windleitelementen erzeugt, da diese stirnseitig gegeneinander verspannt werden, wenn auf das Zugmittel eine Zugspannung aufgebracht wird. Durch die biegeweichen bzw. flexiblen Eigenschaften des Seiles, des Gurtes oder der Kette entsteht der Vorteil, dass diese Form des Zugmittels sich an den Verlauf der Aufnahmekanäle in den mehreren Windleitelementen anpassen kann.

Das Zugmittel kann also als geschlossener Ring in sich verspannt werden oder es kann vorgesehen werden, dass das Zugmittel mit seinen Enden gegen die Stirnwand des Fahrzeugteils oder gegen einen sonstigen Körper der Einbauumgebung verspannbar ist. Dabei kann ein Spannmittel im Zugmittel dazu dienen, auf das Zugmittel eine Spannung aufzubringen. Das Spannmittel umfasst insbesondere ein Federelement, um eine dauerhafte Verspannung mit einer flachen Verspannungskennlinie zu erzielen. Gemäß einer vorteilhaften Weiterbildung der erfindungsgemäßen

Windleiteinrichtung ist zur Anordnung jedes Windleitelementes an einem Fahrzeugteil wenigstens ein Montageprofil vorgesehen, das mit einer insbesondere gegenüberliegenden ersten Seite an dem Fahrzeugteil anordenbar ist und an dem an einer zweiten Seite das wenigstens eine Windleitelement angeordnet ist. Die Verwendung von Montageprofilen zur Anordnung zwischen dem Windleitelement und der Stirnseite des Fahrzeugteils ermöglicht eine flexiblere Ausführung der Windleiteinrichtung, und für beispielsweise verschiedene Abstände zwischen den Fahrzeugteilen können gleiche Windleitelemente Verwendung finden, wenn entsprechend angepasste Montageprofile zum Einsatz kommen. Die Höhe der Montageprofile, also der Abstand zwischen der ersten Seite und der zweiten Seite, kann so angepasst werden, dass die sich gegenüberstehenden Windleitelemente mit der geforderten Betriebskraft gegeneinander drücken. Zudem erleichtert die Verwendung von Montageprofilen die Montage der Windleiteinrichtung an der Stirnseite des Fahrzeugteils.

Vorteilhafterweise kann wenigstens ein Windleitelement eine fensterförmige Aussparung aufweisen, durch die die Hohlkammer von einer Außenseite des Windleitelementes zugänglich ist, wobei sich die Aussparung auch über der gesamten Länge des Windleitelementes hinweg erstrecken kann. Insbesondere ist es vorteilhaft, wenn die fensterförmige Aussparung in die Innenseite eines Übergangs weist, da damit eine Innenkontur bei einer Biegung des Windleitelementes besser gebildet werden kann, da die Aussparungen eine innenseitige Stauchung des Materials des Windleitelementes verbessert stattfinden kann.

Erstreckt sich die Aussparung über der gesamten Länge des Windleitelementes hinweg, so entsteht ein entarteter U- förmiger oder bogenförmiger Querschnitt des Windleitelementes, da die Aussparung über der gesamten Länge des Windleitelementes hinweg einen Schenkel des Querschnittprofils fehlen lässt. Ein fehlender Schenkel des Querschnittsprofils wird dann möglich, wenn der Stabilisierungskörper in dem Aufnahmekanal eine das ansonsten elastische Windleitelement stabilisiert. Der fehlende Schenkel befindet sich dabei vorzugsweise auf der Innenseite der Windleiteinrichtung, die zum begehbaren Bereich des Überganges bzw. zu einem Innenbalg hin weist. Der fehlende Schenkel kann auch nur auf einer Teillänge des Windleitelementes vorgesehen sein, beispielsweise auf der Unterseite des Überganges, um Bauraum für weitere Komponenten zu schaffen.

Die Erfindung richtet sich weiterhin auf eine Windleiteinrichtung mit Windleitelementen zur Anordnung zwischen zwei beweglich miteinander verbundenen Fahrzeugteilen, insbesondere eines Schienenfahrzeugs, aufweisend einen U-förmigen oder bogenförmigen Querschnitt mit einer Hohlkammer, und es ist erfindungsgemäß vorgesehen, dass im Querschnitt der Windleitelemente ein Aufnahmekanal ausgebildet ist, in den ein Stabilisierungskörper zur Stabilisierung der Windleitelemente einbringbar ist, wobei wenigstens eine Materialkomponente zur Bildung der Windleitelemente einen Materialabschnitt aufweist, der in die Hohlkammer ragt und den Aufnahmekanal bildet.

Weisen die Windelemente erfindungsgemäß eine oder mehrere Materialkomponenten auf, kann wenigstens eine Materialkomponente einen Materialabschnitt bilden, der in die Hohlkammer ragt und den Aufnahmekanal erzeugt. Mit besonderem Vorteil ist dabei der Materialabschnitt innerhalb des Hohlraums am kopfseitigen Ende des Windleitelementes angeordnet, um eine besonders wirkungsvolle Aussteifung der Windelemente in Querrichtung zu erreichen, wenn durch den Aufnahmekanal wenigstens abschnittsweise ein Stabilisierungskörper geführt ist.

Gemäß einem weiteren Aspekt der Erfindung ist vorgesehen, das bei einer U-förmigen Ausbildung der Windelemente mit einem Grundabschnitt zur Bildung einer außenseitigen Kontaktfläche zum Kontakt mit einem Windleitelement in Anordnung an einem gegenüberliegenden Fahrzeugteil und den vom Grundabschnitt abragenden Schenkeln der Aufnahmekanal in einem Eckbereich zwischen dem Grundabschnitt und einem der Schenkel im Querschnitt der Windelemente ausgebildet ist. Der Aufnahmekanal befindet sich dabei vorzugsweise in einem Eckbereich auf der Innenseite der Windleiteinrichtung, die zum begehbaren Bereich des Überganges bzw. zu einem Innenbalg hin weist, da bei einer Zugkraftbeaufschlagung das oder die Windleitelemente radial nach innen in den Übergang hinein gezogen werden können. Selbstverständlich kann auch vorgesehen sein, dass in beiden Eckbereichen je ein Aufnahmekanal mit in diesen aufgenommenen Stabilisierungskörpern angeordnet ist.

Alternativ hierzu ist bei einer bogenförmigen Ausbildung der Windleitelemente mit einem zwischen den Schenkeln vorhandenen Scheitelabschnitt zur Bildung der Kontaktfläche zum Kontakt mit einem Windleitelement in Anordnung an einem gegenüberliegenden Fahrzeugteil der Aufnahmekanal im Scheitelabschnitt der Windleitelemente ausgebildet, sodass im Querschnitt des Windleitelementes eine laterale Symmetrie vorherrscht. Eine bogenförmige Ausbildung des Windleitelementes beschreibt vorliegend in Abgrenzung einer eher kastenartigen, U-förmigen Ausbildung, dass im Querschnitt keine Kanten des Windleitelementes vorhanden sind, die außenseitig die Kontaktfläche begrenzen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Draufsicht auf eine Windleiteinrichtung in Anordnung zwischen zwei Fahrzeugteilen;
- Fig. 2: eine perspektivische Ansicht eines Fahrzeugteils mit einer auf der Stirnseite angeordneten Windleiteinrichtung:
- Fig. 3: einen Abschnitt einer Windleiteinrichtung, umfassend zwei Windleitelemente;
- Fig. 4: die Darstellung eines Windleitelementes von einer Stirnseite mit der Anordnung eines Aufnahmekanals,
- Fig. 5: eine weitere perspektivische Ansicht eines Windleitelementes, das aufgenommen ist durch Montageprofile und Aussparungen an einer Seite aufweist,
- Fig. 6: ein weiteres Ausführungsbeispiel einer Windleiteinrichtung mit einzelnen Windleitelementen, die nicht stirnseitig an benachbarte Windleitelemente angrenzen und
- Fig. 7: ein weiteres Ausführungsbeispiel einer Windleiteinrichtung mit einzelnen Windleitelementen, die an der Stirnwand des Fahrzeugteils mittels vorgesehener Anbindungsmittel verspannt sind.

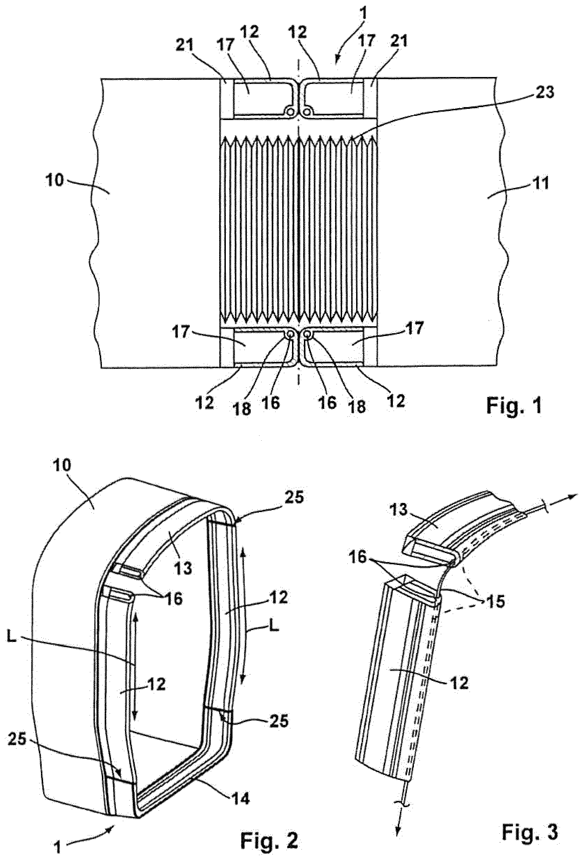

Figur 1 zeigt eine schematisierte Ansicht der Anordnung einer Windleiteinrichtung 1 zwischen einem ersten Fahrzeugteil 10 und einem zweiten Fahrzeugteil 11. Die Windleiteinrichtung 1 ist Teil eines Übergangs zwischen den beiden Fahrzeugteilen 10, 11 und ist im Wesentlichen bündig zur Außenseite der Fahrzeugteile 10, 11 angeordnet. Innerhalb der Windleiteinrichtung 1 befindet sich zwischen den Fahrzeugteilen 10, 11 einen Innenbalg 23. Mit weiteren, nicht dargestellten Komponenten, insbesondere einer Bodenbaugruppe, bilden die Windleiteinrichtung 1 und der Innenbalg 23 einen Übergang zwischen zwei Fahrzeugteilen 10, 11.

Die Windleiteinrichtung 1 weist mehrere Windleitelemente 12 auf, die an der jeweiligen Stirnseite der Fahrzeugteile 10, 11 umlaufend angeordnet sind. Die Querschnittsansicht der Windleitelemente 12 stellt diese folglich in den Seitenbereichen der Fahrzeugteile 10, 11 dar.

Die Windleitelemente 12 sind mittels Aufnahmeprofilen 21 an den Fahrzeugteilen 10, 11 angeordnet und berühren sich über zugehörige Kontaktflächen an ihren Stirnseiten in gegenüberstehender Anordnung. An jedem der Fahrzeugteile 10, 11 ist folglich mindestens ein Windleitelement 12 angeordnet, die sich somit gegenüberstehen und stirnseitig berühren.

Durch die quergeschnittene Ansicht der Windleitelemente 12 sind Hohlkammern 17 gezeigt, die durch die Materialwände sowie durch die Aufnahmeprofile 21 zur Aufnahme der Windleitelemente 12 umschlossen werden. Innenseitig in den Windleitelementen 12 befinden sich erfindungsgemäß Aufnahmekanäle 16, die durch Materialabschnitte 18 der Windleitelemente 12 gebildet sind. In die Aufnahmekanäle 16 sind Stabilisierungskörper einsetzbar, wie in Zusammenhang mit den weiteren Figuren 3, 5, 6 und 7 gezeigt und näher beschrieben.

Figur 2 zeigt eine perspektivische Ansicht eines ersten Fahrzeugteils 10, an dem stirnseitig mehrere Windleitelemente 12, 13 und 14 angebracht sind. Die Windleitkanäle12, 13, 14 treffen in Stoßstellen 25 aufeinander, sodass die mit Bezug auf die Längsrichtung L der Windleitelemente 12, 13, 14 ausgebildeten Stirnseiten der jeweils benachbarten Windleitelemente 12, 13, 14 aneinander anliegen.

Um die Windleitelemente 12, 13, 14 insbesondere gegeneinander zu stabilisieren, sind die Aufnahmekanäle 16 vorgesehen, die sich gemäß dem Ausführungsbeispiel über der gesamten Länge der Windleitelemente 12, 13, 14 in Längsrichtung L durch diese hindurch erstrecken. Damit wird die Möglichkeit geschaffen, einen durchgehenden Stabilisierungskörper beispielsweise in Form eines Seils oder einer Kette durch die einen Ringschluss bildenden Aufnahmekanäle 16 der mehreren Windleitelemente 12, 13, 14 zu führen.

Figur 3 zeigt beispielhaft die Anordnung eines Stabilisierungskörpers 15 in Form eines Zugmittels, das durch die Aufnahmekanäle 16 in den Windleitelementen 12, 13 hindurchgeführt ist. Die Darstellung zeigt aufgrund eines Schnittes durch das Windleitelement 13 die Windleitelemente 12, 13 beabstandet zueinander, die jedoch in Anordnung an den Fahrzeugteilen 10, 11 im Betrieb der Windleiteinrichtung 1 aneinander anliegen. Wird auf den Stabilisierungskörper 15 in Form eines Seils oder einer Kette eine Zugkraft aufgebracht, angedeutet mit Pfeilen an den Enden des Stabilisierungskörpers 15, so werden die Windleitelemente 12, 13 mit ihren Stirnseiten aufeinander gedrückt und somit in Querrichtung gegeneinander stabilisiert. Durch diese Stabilisierung wird eine Seitenbewegung der Windleitelemente 12, 13 gegeneinander verringert oder sogar vermieden.

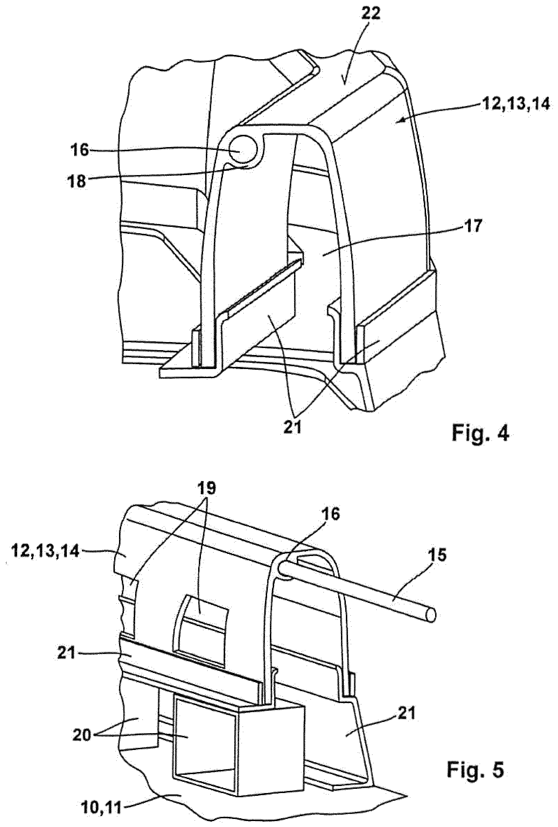

Figur 4 zeigt eine perspektivische Ansicht eines Windleitelementes 12, 13 14, welches aufgenommen ist mittels einem Aufnahmeprofil 21. Das Windleitelement 12, 13, 14 weist eine Materialbahn in einer U-Form auf, wobei die Aufnahme des Windleitelementes 12, 13, 14 mittels des Aufnahmeprofils 21 an den freien Enden der beiden Schenkel der U-Form erfolgt. Auf dem Querabschnitt zwischen den beiden Schenkeln der U-Form des Windleitelementes 12, 13, 14 befindet sich außenseitig eine Kontaktfläche 22, über die das Windleitelement 12, 13, 14 mit einem gegenüberliegenden Windleitelement in Kontakt gebracht wird, wobei der Kontakt ebenfalls über eine Kontaktfläche an der komplementären Position des weiteren Windleitelementes am benachbarten Fahrzeugteil erfolgt.

Durch die U-Form des Windleitelementes 12, 13, 14 ist eine Hohlkammer 17 gebildet, in der ein Aufnahmekanal 16 ausgebildet ist. Die Bildung des Aufnahmekanals 16 erfolgt über einen Materialabschnitt 18 des Materials, aus dem auch das Windleitelement 12, 13, 14 ausgebildet ist.

Beispielsweise kann das Windleitelement 12, 13, 14 aus einem Elastomer im Extrusionsverfahren hergestellt werden, sodass der Materialabschnitt 18 auf einfache Weise mittels einer entsprechenden Ausführung einer Extrusionsmatrize ausgebildet werden kann, um den Aufnahmekanal 16 zu bilden. Folglich wird der Materialabschnitt 18 einteilig und materialeinheitlich mit dem Material des Windleitelementes 12, 13, 14 ausgebildet, sodass eine nachträgliche Anordnung des Aufnahmekanals 16 an der Innenseite der Hohlkammer 17 des Windleitelementes 12, 13, 14 beispielsweise durch ein Vernähen oder einem stoffschlüssigen Fügen nicht erforderlich ist.

Figur 5 zeigt schließlich eine weitere perspektivische Ansicht des Windleitelementes 12, 13, 14 mit seitlichen fensterförmigen Aussparungen 19. Zudem ist eine Anordnung von Montageprofilen 20 gezeigt, die sich zwischen dem Windleitelement 12, 13, 14 und dem Fahrzeugteil 10, 11 befinden. Die Anordnung der Montageprofile 20 erfolgt beispielsweise zur Innenseite in den Übergang zwischen den Fahrzeugteilen 10, 11 hinein, und auf der Außenseite ist der weitere Schenkel des Windleitelementes 12, 13, 14 mittels des Aufnahmeprofils 21 aufgenommen. Durch die quergeschnittene Ansicht des Windleitelementes 12, 13, 14 ist im Bereich der Hohlkammer 17 zudem der Aufnahmekanal 16 gezeigt, durch den ein Stabilisierungskörper 15 in Form eines Seiles hindurchgeführt ist. Schließt sich ein weiteres Windleitelement 12, 13, 14 an die Stirnseite des gezeigten Windleitelementes 12, 13, 14 an, so kann der Stabilisierungskörper 15 im sich ebenfalls anschließenden Aufnahmekanal 16 des weiteren Windleitelementes hindurch geführt werden.

Die gezeigten Windleitelemente 12, 13, 14 können wenigstens auf der Außenseite eine Beschichtung aufweisen, die einen Lack bildet, um das optische Erscheinungsbild der Windleiteinrichtung 1 und damit des Überganges zwischen den Fahrzeugteilen 10, 11 zu verbessern. Die Lackierung bzw. die Beschichtung kann insbesondere auf Basis eines Polyurethans (PU-Lack), auf Basis von Gummi (GU-Lack), einem Polyvinylchlorid (PVC-Lack), einem Polytetrafluorethylen PTFE oder einer thermoplastischen Folie basieren. Die mögliche Aufbringung solcher Beschichtungen bzw. Lacke beruht darauf, dass durch die erfindungsgemäße Anordnung eines Stabilisierungskörpers 15 zwischen den Windleitelementen, 12, 13, 14, insbesondere in Anordnung in einem Aufnahmekanal, durch eine erreichte Steifigkeitserhöhung eine elastische Verformung der Windleitelemente 12, 13, 14 nicht mehr so stark auftritt, und die Lacke und Beschichtungen müssen nur noch geringen Verformungen und Dehnungen standhalten, was ihre Verwendung erst ermöglicht.

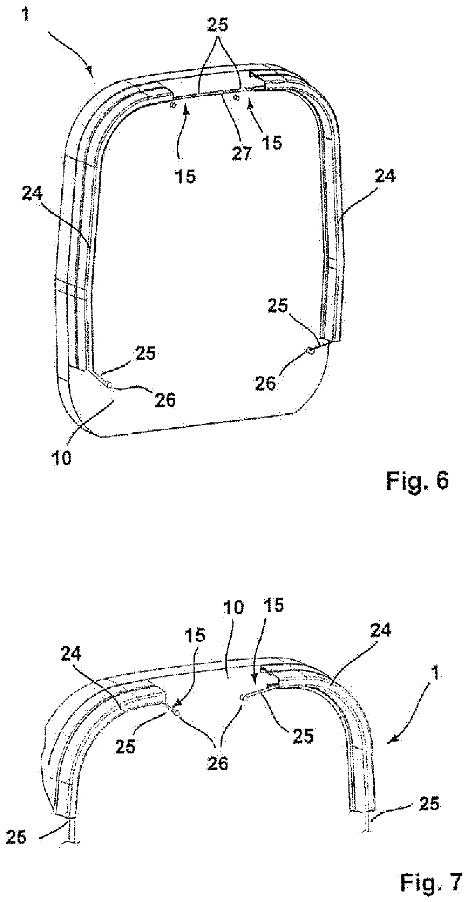

In Figur 6 ist ein weiteres Ausführungsbeispiel einer Windleiteinrichtung 1 dargestellt, und an der Stirnseite des Fahrzeugteils 10 sind in den Seitenbereichen einzelne Windleitelemente 24 angebracht, die somit nicht stirnseitig an benachbarte Windleitelemente angrenzen. Die gezeigten Stabilisierungskörper 15, die durch die Windleitelemente 15 zu dessen Stabilisierung hindurchgeführt sind, sind als ein jeweiliges Seil 25 ausgeführt und oberseitig mit einem Verbindungsmittel 27 miteinander verbunden. Damit verläuft ein Abschnitt der Stabilisierungskörper 15, der aus den Windleitelementen 24 herausgeführt ist, frei durch den Übergang hindurch.

Unterseitig sind die Seile 25 mit Anbindungsmitteln 26 an der Stirnwand des Wagenteils 10 befestigt. Dabei kann wenigstens einseitig ein nicht dargestelltes Spannmittel vorgesehen sein, mit denen das Seil 25 gespannt werden kann.

Figur 7 verdeutlicht hierzu, dass auch im oberen Bereich zwischen den gebogen ausgeführten Windleitelementen 24 die Stabilisierungskörper 15 in Form der Seile 25 an der Stirnwand des Fahrzeugteils 10 mittels der Anbindungsmittel 26 verspannt sein können.

Im Ergebnis richtet sich die Erfindung damit auf einen Stabilisierungskörper 15 in Anordnung in oder an einem Windleitelement 12, 13, 14, 24, das eine Stabilisierung des im allgemeinen elastischen Windleitelementes 12, 13, 14, 24 unabhängig davon bewirkt, ob eine Stabilisierung von zwei gegeneinander angrenzenden Windleitelementen 12, 13, 14 erfolgt oder ob eine Stabilisierung eines alleinstehenden Windleitelementes 24 an oder gegen eine Einbauumgebung erfolgt, beispielsweise an der Stirnwand eines Fahrzeugteils 10, 11.

Die Erfindung beschränkt sich in ihrer Ausführung nicht auf das vorstehend angegebene bevorzugte Ausführungsbeispiel. Vielmehr ist eine Anzahl von Varianten im Rahmen der Ansprüche denkbar, welche von der dargestellten Lösung auch bei grundsätzlich anders gearteten Ausführungen Gebrauch macht.

### Bezugszeichenliste:

- 1: Windleiteinrichtung

- 10: Fahrzeugteil
- 11: Fahrzeugteil
- 12: Windleitelement
- 13: Windleitelement
- 14: Windleitelement
- 15: Stabilisierungskörper
- 16: Aufnahmekanal
- 17: Hohlkammer
- 18: Materialabschnitt
- 19: Aussparung
- 20: Montageprofil
- 21: Aufnahmeprofil
- 22: Kontaktfläche
- 23: Innenbalg
- 24: Windleitelement
- 25: Seil
- 26: Anbindungsmittel
- 27: Verbindungsmittel

- L: Längsrichtung

## Patentansprüche

1. Windleiteinrichtung (1) zu Anordnung zwischen zwei beweglich miteinander verbundenen Fahrzeugteilen (10, 11), insbesondere eines Schienenfahrzeuges, aufweisend mehrere an einem jeweiligen Fahrzeugteil (10, 11) anordenbare Windleitelemente (12, 13, 14), die elastisch verformbar sind und einen U-förmigen oder bogenförmigen Querschnitt aufweisen,
**dadurch gekennzeichnet,**
**dass** wenigstens ein Stabilisierungskörper (15) vorgesehen ist, der sich zumindest abschnittsweise in die Windleitelemente (12, 13, 14) hinein erstreckt und an wenigstens einer Stirnseite der Windleitelemente (12, 13, 14) aus diesen herausgeführt ist, wobei die Windleitelemente (12, 13, 14) mit Bezug auf ihre Längsrichtung stirnseitig aneinander angrenzen, wobei sich der Stabilisierungskörper (15) mit einem ersten Abschnitt in ein erstes Windleitelement (12, 13, 14) und mit einem zweiten Abschnitt in ein zweites Windleitelement (12, 13, 14) hinein erstreckt.

2. Windleiteinrichtung (1) nach Anspruch 1,
**dadurch gekennzeichnet,**
**dass** jedes Windleitelement (12, 13, 14) wenigstens einen Aufnahmekanal (16) aufweist, in den sich der Abschnitt des Stabilisierungskörpers (15) hinein erstreckt.

3. Windleiteinrichtung (1) nach Anspruch 2,
**dadurch gekennzeichnet,**
**dass** jedes Windleitelement (12, 13, 14) mit der U-Form oder der Bogenform eine Hohlkammer (17) aufweist, wobei der Aufnahmekanal (16) in der Hohlkammer (17) ausgebildet ist.

4. Windleiteinrichtung (1) nach Anspruch 3,
**dadurch gekennzeichnet,**
**dass** jedes Windleitelement (12, 13, 14) einen Materialabschnitt (18) aufweist, der in die Hohlkammer (17) ragt und den Aufnahmekanal (16) bildet, insbesondere umfassend ein Elastomer.

5. Windleiteinrichtung (1) nach einem der vorgenannten Ansprüche,
**dadurch gekennzeichnet,**
**dass** der Stabilisierungskörper (15) einen Stab oder eine Stange bildet, der bzw. die sich mit gegenüberliegenden Abschnitten in die stirnseitig aneinander angrenzen Windleitelemente (12, 13, 14) hinein erstreckt.

6. Windleiteinrichtung (1) nach einem der Ansprüche 2 bis 4,
**dadurch gekennzeichnet,**
**dass** der Stabilisierungskörper (15) ein Zugmittel bildet, insbesondere ein Seil, ein Gurt oder eine Kette, das, der bzw. die durch den Aufnahmekanal (16) geführt ist.

7. Windleiteinrichtung (1) nach einem der Ansprüche 2 bis 6,
**dadurch gekennzeichnet,**
**dass** sich der Aufnahmekanal (16) in der Längsrichtung (L) über der umlaufenden Länge der mehreren Windleitelemente (12, 13, 14) durch diese hindurch erstreckt, wobei der Stabilisierungskörper (15) die Aufnahmekanäle (16) von wenigstens zwei, von mehr als zwei oder von allen Windleitelementen (12, 13, 14) durchläuft.

8. Windleiteinrichtung (1) nach einem der vorgenannten Ansprüche,
**dadurch gekennzeichnet,**
**dass** der Stabilisierungskörper (15) ein Zugmittel bildet, auf das eine Zugspannung aufgebracht ist, wobei das Zugmittel als geschlossener Ring in sich verspannt ist oder wobei das Zugmittel mit seinen Enden gegen die Stirnwand des Fahrzeugteils (10, 11) oder gegen einen sonstigen Körper der Einbauumgebung verspannbar ist.

9. Windleiteinrichtung (1) nach einem der vorgenannten Ansprüche,
**dadurch gekennzeichnet,**
**dass** zur Anordnung jedes Windleitelementes (12, 13, 14) an einem Fahrzeugteil (10, 11) wenigstens ein Montageprofil (20) vorgesehen ist, das mit einer ersten Seite an dem Fahrzeugteil (10, 11) anordenbar ist und an dem an einer zweiten Seite das wenigstens eine Windleitelement (12, 13, 14) angeordnet ist.

10. Windleiteinrichtung (1) nach einem der Ansprüche 3-9,
**dadurch gekennzeichnet,**
**dass** wenigstens ein Windleitelement (12, 13, 14) eine fensterförmige Aussparung (19) aufweist, durch die die Hohlkammer (17) von einer Außenseite des Windleitelementes (12, 13, 14) zugänglich ist, wobei die Aussparung (19) über einer Teillänge oder über der gesamten Länge des Windleitelementes (12, 13, 14) hinweg ausgebildet ist.

11. Windleiteinrichtung (1) nach einem der vorgenannten Ansprüche,
**dadurch gekennzeichnet,**
**dass** im Querschnitt der Windleitelemente (12, 13, 14) ein Aufnahmekanal (16) ausgebildet ist, in den der Stabilisierungskörper (15) zur Stabilisierung der Windleitelemente (12, 13, 14) einbringbar ist, wobei wenigstens eine Materialkomponente zur Bildung der Windleitelemente (12, 13, 14) einen Materialabschnitt (18) aufweist, der in eine durch den U-förmigen oder bogenförmigen Querschnitt gebildeten Hohlkammer (17) ragt und den Aufnahmekanal (16) bildet.

12. Windleiteinrichtung (1) nach Anspruch 11,
**dadurch gekennzeichnet,**
**dass** bei einer U-förmigen Ausbildung der Windleitelemente (12, 13, 14) mit einem Grundabschnitt zur Bildung einer außenseitigen Kontaktfläche (22) zum Kontakt mit einem Windleitelement in Anordnung an einem gegenüberliegenden Fahrzeugteil und den vom Grundabschnitt abragenden Schenkeln des Querschnittes der Aufnahmekanal (16) in wenigstens einem inneren Eckbereich zwischen dem Grundabschnitt und einem Schenkel im Querschnitt der Windleitelemente (12, 13, 14) ausgebildet ist.

13. Windleiteinrichtung (1) nach Anspruch 11,
**dadurch gekennzeichnet,**
**dass** bei einer bogenförmigen Ausbildung der Windleitelemente (12, 13, 14) mit einem zwischen den Schenkeln vorhandenen Scheitelabschnitt zur Bildung der außenseitigen Kontaktfläche (22) zum Kontakt mit einem Windleitelement in Anordnung an einem gegenüberliegenden Fahrzeugteil der Aufnahmekanal (16) im Scheitelabschnitt der Windleitelemente (12, 13, 14) ausgebildet ist.

## Claims

1. A fairing (1) for arrangement between two vehicle parts (10, 11), in particular of a rail vehicle, movably connected to one another, having a plurality of fairing elements (12, 13, 14) that are arrangeable at a respective vehicle part (10, 11), that are elastically deformable, and that have a U-shaped or arcuate cross-section,
**characterized in that**
at least one stabilization body (15) is provided that extends at least sectionally into the fairing elements (12, 13, 14) and is led out thereof at at least one front face of the fairing elements (12, 13, 14), with the fairing elements (12, 13, 14) being adjacent to one another at front faces with respect to their longitudinal directions, with a first section of the stabilization body (15) extending into a first fairing element (12, 13, 14) and a second section extending into a second fairing element (12, 13, 14).

2. A fairing (1) in accordance with claim 1,
**characterized in that**
each fairing element (12, 13, 14) has at least one mounting passage (16) into which the section of the stabilization body (15) extends.

3. A fairing (1) in accordance with claim 2,
**characterized in that**
each fairing element (12, 13, 14) having the U shape or the arcuate shape has a hollow chamber (17), with the mounting passage (16) being formed in the hollow chamber (17).

4. A fairing (1) in accordance with claim 3,
**characterized in that**
each fairing element (12, 13, 14) has a material section (18) that projects into the hollow chamber (17) and forms the mounting passage (16), in particular comprising an elastomer.

5. A fairing (1) in accordance with one of the preceding claims,
**characterized in that**
the stabilization body (15) forms a bar or a rod whose oppositely disposed sections extend into the fairing elements (12, 13, 14) adjacent to one another at front faces.

6. A fairing (1) in accordance with one of the claims 2 to 4,
**characterized in that**
the stabilization body (15) forms a pulling means, in particular a rope, a belt, or a chain, that is respectively led through the mounting passage (16).

7. A fairing (1) in accordance with one of the claims 2 to 6,
**characterized in that**
the mounting passage (16) extends in the longitudinal direction (L) over the peripheral length of the plurality of fairing elements (12, 13, 14) and through them, with the stabilization body (15) running through the mounting passages (16) of at least two, of more than two, or of all the fairing elements (12, 13, 14).

8. A fairing (1) in accordance with one of the preceding claims,
**characterized in that**
the stabilization body (15) forms a pulling means onto which a tension is applied, with the pulling means being tensionable in itself as a closed ring or wherein the ends of the pulling means are tensionable against the front wall of the vehicle part (10, 11) or against another body of the installation environment.

9. A fairing (1) in accordance with one of the preceding claims,
**characterized in that**
at least one installation section (20) is provided for the arrangement of each fairing element (12, 13, 14) at a vehicle part (10, 11,) with a first side of said installation section being arrangeable at the vehicle part (10, 11) and with the at least one fairing element (12, 13, 14) being arranged at a second side at said installation section.

10. A fairing (1) in accordance with one of the claims 3 to 9,
**characterized in that**
at least one fairing element (12, 13, 14) has a window-shaped cut-out (19) through which the hollow chamber (17) is accessible from an outer side of the fairing element (12, 13, 14), with the cut-out (19) being formed over a partial length or over the total length of the fairing element (12, 13, 14).

11. A fairing (1) in accordance with one of the preceding claims,
**characterized in that**
a mounting passage (16) is formed in the cross-section of the fairing elements (12, 13, 14) into which mounting passage a stabilization body (15) can be introduced for stabilizing the fairing elements (12, 13, 14), with at least one material component for forming the fairing elements (12, 13, 14) having a material section (18) that projects into the hollow chamber (17) formed by the U-shaped or arcuate cross-section and forms the mounting passage (16).

12. A fairing (1) in accordance with claim 11,
**characterized in that**
with a U-shaped design of the fairing elements (12, 13, 14) having a base section for forming an outer-side contact surface (22) for contact with a fairing element in an arrangement at an oppositely disposed vehicle part and having the limbs of the cross-section projecting from the base section, the mounting passage (16) is formed in at least one inner corner region between the base section and a limb in the cross-section of the fairing elements (12, 13, 14).

13. A fairing (1) in accordance with claim 11,
**characterized in that**
with an arcuate design of the fairing element (12, 13, 14) having a peak section present between the limbs for forming the outer-side contact surface (22), for contact with a fairing element in an arrangement at an oppositely disposed vehicle part, the mounting passage (16) is formed in the peak section of the fairing element (12, 13, 14).

## Revendications

1. Ensemble déflecteur (1) destiné à être agencé entre deux parties de véhicule (10, 11) reliées l'une à l'autre de manière mobile, en particulier d'un véhicule ferroviaire, comportant plusieurs éléments déflecteurs (12, 13, 14) pouvant être agencés sur une partie de véhicule (10, 11) respective, lesquels sont déformables de manière élastique et présentent une section transversale en forme de U ou en forme d'arc,
**caractérisé en ce que**
au moins un corps de stabilisation (15) est prévu, qui s'étend au moins en partie dans les éléments déflecteurs (12, 13, 14) et qui sort des éléments déflecteurs (12, 13, 14) sur au moins un côté frontal de ceux-ci, les éléments déflecteurs (12, 13, 14) étant adjacents les uns aux autres côté frontal par rapport à leur direction longitudinale, le corps de stabilisation (15) s'étendant avec une première partie dans un premier élément déflecteur (12, 13, 14) et avec une seconde partie dans un second élément déflecteur (12, 13, 14).

2. Ensemble déflecteur (1) selon la revendication 1,
**caractérisé en ce que**
chaque élément déflecteur (12, 13, 14) comporte au moins un canal de réception (16), dans lequel s'étend la partie du corps de stabilisation (15).

3. Ensemble déflecteur (1) selon la revendication 2,
**caractérisé en ce que**
chaque élément déflecteur (12, 13, 14) avec la forme de U ou la forme d'arc comporte une cavité (17), le canal de réception (16) étant réalisé dans la cavité (17).

4. Ensemble déflecteur (1) selon la revendication 3,
**caractérisé en ce que**
chaque élément déflecteur (12, 13, 14) comporte une partie de matériau (18) qui fait saillie dans la cavité (17) et forme le canal de réception (16), comprenant en particulier un élastomère.

5. Ensemble déflecteur (1) selon l'une des revendications précédentes,
**caractérisé en ce que**
le corps de stabilisation (15) forme une barre ou une tige, qui s'étend avec des parties opposées dans les éléments déflecteurs (12, 13, 14) adjacents les uns aux autres côté frontal.

6. Ensemble déflecteur (1) selon l'une des revendications 2 à 4,
**caractérisé en ce que**
le corps de stabilisation (15) forme un moyen de traction, en particulier un câble, une sangle ou une chaîne, qui est guidé ou guidée à travers le canal de réception (16).

7. Ensemble déflecteur (1) selon l'une des revendications 2 à 6,
**caractérisé en ce que**
le canal de réception (16) s'étend dans la direction longitudinale (L) à travers les plusieurs éléments déflecteurs (12, 13, 14) sur la longueur périphérique de ceux-ci, le corps de stabilisation (15) traversant les canaux de réception (16) d'au moins deux, de plus de deux ou de tous les éléments déflecteurs (12, 13, 14).

8. Ensemble déflecteur (1) selon l'une des revendications précédentes,
**caractérisé en ce que**
le corps de stabilisation (15) forme un moyen de traction, auquel est appliquée une contrainte de traction, le moyen de traction étant tendu sur lui-même sous la forme d'un anneau fermé ou le moyen de traction pouvant être tendu avec ses extrémités contre la paroi frontale de la partie de véhicule (10, 11) ou contre un autre corps de l'environnement de montage.

9. Ensemble déflecteur (1) selon l'une des revendications précédentes,
**caractérisé en ce que**
pour l'agencement de chaque élément déflecteur (12, 13, 14) sur une partie de véhicule (10, 11), au moins un profilé de montage (20) est prévu, qui peut être agencé avec un premier côté sur la partie de véhicule (10, 11) et sur lequel l'au moins un élément déflecteur (12, 13, 14) est agencé sur un second côté.

10. Ensemble déflecteur (1) selon l'une des revendications 3 à 9,
**caractérisé en ce que**
au moins un élément déflecteur (12, 13, 14) comporte un évidement (19) en forme de fenêtre, par lequel la cavité (17) est accessible depuis un côté extérieur de l'élément déflecteur (12, 13, 14), l'évidement (19) étant réalisé sur une longueur partielle ou sur toute la longueur de l'élément déflecteur (12, 13, 14).

11. Ensemble déflecteur (1) selon l'une des revendications précédentes,
**caractérisé en ce que**
un canal de réception (16) est réalisé dans la section transversale des éléments déflecteurs (12, 13, 14), le corps de stabilisation (15) pouvant être introduit dans celui-ci pour la stabilisation des éléments déflecteurs (12, 13, 14), au moins un composant de matériau pour former les éléments déflecteurs (12, 13, 14) comportant une partie de matériau (18) qui fait saillie dans une cavité (17) formée par la section transversale en forme de U ou en forme d'arc et qui forme le canal de réception (16).

12. Ensemble déflecteur (1) selon la revendication 11,
**caractérisé en ce que**
lors d'une réalisation en forme de U des éléments déflecteurs (12, 13, 14) avec une partie de base destinée à former une surface de contact (22) extérieure pour le contact avec un élément déflecteur disposé sur une partie de véhicule opposée et les côtés partant de la partie de base de la section transversale, le canal de réception (16) est réalisé dans au moins une zone de coin intérieure entre la partie de base et un côté dans la section transversale des éléments déflecteurs (12, 13, 14).

13. Ensemble déflecteur (1) selon la revendication 11,
**caractérisé en ce que**
lors d'une réalisation en forme d'arc des éléments déflecteurs (12, 13, 14) avec une partie de sommet présente entre les côtés pour former la surface de contact (22) extérieure pour le contact avec un élément déflecteur disposé sur une partie de véhicule opposée, le canal de réception (16) est réalisé dans la partie de sommet des éléments déflecteurs (12, 13, 14).
